# EUROPÄISCHE PATENTSCHRIFT

(11) **EP 4 494 444 B1**
(45) Veröffentlichungstag und Bekanntmachung des Hinweises auf die Patenterteilung: **17.12.2025**
(21) Anmeldenummer: 24178522.9
(22) Anmeldetag: 28.05.2024
(51) Int. Cl.: A01D 61/00

(54) **ERNTEBERGUNGSVORRICHTUNG MIT EINEM GESTEUERTE ZINKEN AUFWEISENDEN FÖRDERORGAN**
HARVESTING DEVICE WITH A CONVEYOR ELEMENT HAVING A CONTROLLED TINE
DISPOSITIF DE RÉCOLTE AVEC UN ORGANE DE TRANSPORT À DENTS COMMANDÉES

(30) Priorität: 31.05.2023 DE 102023114298
(43) Veröffentlichungstag der Anmeldung: 22.01.2025
(73) Patentinhaber: Carl Geringhoff GmbH & Co. Kommanditgesellschaft, 59227 Ahlen (DE)
(72) Erfinder: Brox, Christian, 59387 Ascheberg (DE); Pokriefke, Michael, 27798 Hude (DE); Sudhues, Steffen, 59227 Ahlen (DE)
(74) Vertreter: Weeg, Thomas

(56) Entgegenhaltungen:
- EP-B1- 1 712 121
- US-A- 2 529 180
- US-A1- 2003 110 750

## Beschreibung

Die vorliegende Erfindung bezieht sich auf eine Erntebergungsvorrichtung nach dem Oberbegriff des Anspruchs 1.

Aus der Schrift US 7,392,646 B2 ist es bekannt, in einem Draper-Schneidwerk als ein Beispiel für eine Erntebergungsvorrichtung eine Förderwalze als ein funktionsgemäßes Förderorgan zu verwenden. Die Förderwalze fördert unterschlächtig, nimmt das Erntegut an der Vorderseite vom Mittenband des Draper-Schneidwerks an und fördert es mit seiner rotierenden Bewegung nach hinten in Richtung des Schrägförderkanals eines Mähdreschers ab, an den das Draper-Schneidwerk angebaut ist. EP 1 712 121 B1 offenbart auch ein Draper-Schneidwerk.

Um die Förderwirkung zu unterstützen, ist das Förderorgan mit gesteuerten Zinken ausgestattet. Im vorderen in Arbeitsrichtung weisenden Teil der Förderwalze stehen die Zinkenspitzen am weitesten vom zylindrischen Mantel der Förderwalze ab. Wenn sich die Förderwalze in ihrer Rotationsrichtung dreht, nehmen die Zinkenspitzen das anstehende Erntegut mit, drücken es dabei nach unten zusammen und fördern es gleichzeitig in die Abförderrichtung nach unten und hinten. Dabei ziehen sich die Spitzen der Zinken immer weiter in den zylindrischen Mantel zurück, bis sie auf der Rückseite des zylindrischen Mantels vollständig darin eingetaucht sind. Bei einer weiteren Rotation der Förderwalze werden die Zinkenspitzen wieder nach außen gefahren, bis sie wieder am weitesten vom zylindrischen Mantel der Förderwalze abstehen. Durch die gesteuerte Bewegung der Zinken greifen diese bei der Rotation der Förderwalze nach vorne ausgreifend von oben her in eine an die Förderwalze herangeführte Erntegutmatte ein, drücken diese nach unten hin zusammen, harken diese bei der Rotationsbewegung auf den Förderspalt zwischen der Unterseite der Förderwalze und dem Boden der Erntebergungsvorrichtung zu, drücken sie durch den Förderspalt hindurch und ziehen sich danach vollständig aus der Erntegutmatte zurück, um kein Erntegut um das Förderorgan herum aufzuwickeln. Sie unterstützen dadurch die Abförderung und Kompaktierung der Erntegutmatte in einem förderkritischen Bereich.

Die vorbekannte Förderwalze mit dem Abschnitt, in dem sich die gesteuerten Finger befinden, ist ein Teil einer Förderschnecke, die sich über einen großen Teil der Arbeitsbreite des Draper-Schneidwerks erstreckt. Der Abschnitt, in dem die Erntegutmatte nach hinten in Richtung des Schrägförderers abgefördert wird, macht aber nur einen kleinen Teil der Förderschnecke aus. Daraus ergibt sich ein Zielkonflikt hinsichtlich der Funktionsoptimierung beider Bauteile. Während die Förderschnecke mit ihren Schneckenblechen möglichst dicht und kontinuierlich in einer gleichbleibenden Höhe über den Boden der Erntebergungsvorrichtung geführt wird, um gerade auch die Getreidekörner möglichst kontinuierlich, effektiv und ohne Körnerbruch abzufördern, wird das Erntegut in dem Bereich, im dem die gesteuerten Zinken in die Erntegutmatte eintauchen, nur punktuell über die Zinken erfasst und in Förderrichtung bewegt. Wegen der jeweils nur punktuellen Wirkung der gesteuerten Zinken ist es möglich, dass im Erntegutstrom befindliche Fremdkörper in den Bereich zwischen einem oder mehreren Zinken und dem Boden der Erntebergungsvorrichtung gelangen können, wodurch der oder die Zinken dann in ihrer Rotationsbewegung blockiert und verbogen werden oder ganz abbrechen. Deshalb sollten die gesteuerten Finger Fremdkörpern ausweichen können, durch die die gesteuerten Finger oder deren Lagerung auf der Kurbelwelle oder sogar die Kurbelwelle selbst beschädigt werden könnten. In der vorbekannten Vorrichtung ist die Förderwalze zwar an einem Arm gehalten, der um einen Lagerbolzen schwenkbar gehalten ist, der Arm selbst ist aber starr und seine Beweglichkeit auf eine Schwenkbewegung in vertikaler Richtung beschränkt. Auf plötzlich auftretende Kraftspitzen kann diese Konstruktion wegen ihrer Masse nicht schnell genug reagieren. Auch kann sich die Förderwalze wegen der Masse dieser Konstruktion nicht schnell und feindosiert genug an eine schwankende Dicke der beförderten Erntegutmatte anpassen.

Es ist deshalb die Aufgabe der vorliegenden Erfindung, einen Erntebergungsvorsatz zu schaffen, der leichter in der Erntegutmatte befindlichen Fremdkörpern ausweichen kann.

Die Aufgabe wird für eine gattungsgemäße Erntebergungsvorrichtung durch die kennzeichnenden Merkmale des Anspruchs 1 gelöst.

Die Überlastsicherung ist an ihrer der stehenden Welle zugewandten Seite mit der stehenden Welle und an ihrer der stehenden Welle abgewandten Seite über eine Halterung mit dem Rahmen verbunden. Die Überlastsicherung ist als ein Federelement ausgebildet, das bei der Einwirkung einer Überlast mit einer Federbewegung eine Drehbewegung der stehenden Welle aus einer Ausgangsstellung in eine Ausweichstellung zulässt, indem sie eine auf die stehende Welle einwirkende Überlast in sich aufnimmt und dabei Rückstellkräfte in sich aufbaut. Das Federelement ist nach dem Wegfall der Überlast von den Rückstellkräften im Federelement angetrieben selbsttätig wieder in seine ursprüngliche Lage zurückbeweglich und stellt dabei auch die stehende Welle in ihre Ausgangsstellung zurück.

Zwischen dem Rahmen und dem Förderorgan ist ein Maschinenelement in Gestalt eines Federelements zwischengeschaltet, das die gewünschte Flexibilität und Reaktionsgeschwindigkeit aufweist, um Überlastungen der Zinken zu vermeiden. Die Federbewegung ist eine Reaktion auf Kraftspitzen, die über die Zinken auf die Kurbelwelle und die damit fest verbundene stehende Welle eingebracht werden und die von der technischen Auslegung dieser Maschinenkomponenten her eine Überlast darstellen. Das Federelement ist mit seiner Kennlinie auf die Lasten und Kraftspitzen abgestimmt, die konstruktionsseitig für die Zinken, die Kurbelwelle und/oder die stehende Welle als eine Überlast angesehen werden. Dadurch kann das Federelement immer mit einer Ausweichbewegung auf definierte Überlasten reagieren. Da das Federelement als Kraftspeicher zwischen die stehende Welle und den Rahmen der Erntebergungsvorrichtung zwischengeschaltet ist, lässt es bei einer eigenen Ausweich- oder Rückstellbewegung auch eine Drehbewegung der stehenden Welle um ihre eigene Achse zu, über die die Zinken, die Kurbelwelle und die stehende Welle auf diese Maschinenelemente einwirkenden Lastspitzen ausweichen und in ihre Ausgangsstellung zurückkehren können. Wenn sich die stehende Welle bei einer Ausweichbewegung um ihre eigene Achse verdreht, wird dabei auch die Winkellage der fest mit der stehenden Welle verbundenen Kurbelwelle um die der Drehbewegung der stehenden Welle entsprechenden Winkelgrade verändert. Durch die veränderte Relativlage der Kurbelwelle verändert sich gleichzeitig auch die Winkellage der auf der Kurbelwelle abgestützten Zinken. Je nach Drehrichtung der stehenden Welle wird die Winkelstellung dabei im Verhältnis zum Förderorgan steiler oder flacher, und die Zinken stehen dabei auch mehr oder weniger über die Umfangsfläche des zylindrischen Mantels über, als es der Fall wäre, wenn sich die stehende Welle nicht überlastbedingt gedreht hätte.

Mit einer Kraftspitze ist eine Krafteinwirkung gemeint, die groß genug ist, um das Federelement aus seiner Urform zu verformen. Wenn auf das Förderorgan und/oder die Zinken Kräfte einwirken, die so gering sind, dass sich das Federelement nach seiner Federkennlinie noch nicht verformt, werden diese Maschinenelemente auch noch nicht überlastet. Die dann auf das Federelement einwirkenden Kräfte sind noch keine Kraftspitzen oder eine Überlast im Sinn der vorliegenden Erfindung. Das Federelement ist von seinem Verformungsverhalten und seiner Federkennlinie her so ausgelegt, dass es sich bei einem solchen Normalbetrieb noch nicht oder kaum wahrnehmbar verformt. Die Zinken, die Kurbelwelle und die stehende Welle verändern dabei dementsprechend auch ihre räumliche Lage beziehungsweise ihre Drehstellung im Verhältnis zum Förderorgan nicht wegen einer Verformung des Federelements. Das Federelement ist von seinem Verformungsverhalten und seiner Federkennlinie her so ausgelegt, dass es sich in dem Fall, dass die auf einen oder mehrere Zinken, die Kurbelwelle und/oder die stehende Welle einwirkenden Kräfte einen Grenzwert überschreiten, der für die Unversehrtheit dieser Bauteile als kritisch angesehen wird, mit einer Aufdehnbewegung zu verformen beginnt. Das Federelement ist demgemäß von seiner Auslegung her auf die Kräfte abgestimmt, die für die Unversehrtheit des Förderorgans und der Zinken als kritisch angesehen werden. Als Kraftspitzen und eine Überlast im Sinne dieser Erfindung sind Kräfte anzusehen, die oberhalb der als kritisch bewerteten Grenzwerte liegen.

Das Federelement schafft mit seinem Federweg einen Verstellweg, der über seine Länge einen schnellen und einfachen Abbau von Kraftspitzen ermöglicht. Das Federelement kann flexibel auf Kraftspitzen reagieren, ohne dass dabei die Masse einer herkömmlichen Überlastsicherung beschleunigt oder das Losbrechmoment der Lagerung einer herkömmlichen Überlastsicherung überwunden werden müssten. Das Federelement bildet auf diese Weise eine Überlastsicherung, durch die der oder die jeweils belasteten Zinken, die Kurbelwelle und die stehende Welle gegen sonst drohende Beschädigungen geschützt werden. Indem das Federelement direkt zwischen dem Rahmen und der stehenden Welle angeordnet ist, können Reaktionsbewegungen direkt an der stehenden Welle erfolgen und nicht erst mittelbar durch Bewegungen von Elementen in einer herkömmlichen Überlastsicherung. Das Federelement bildet selbst die Überlastsicherung, dadurch kann auf zusätzliche Bauteile verzichtet werden. Der Bauteilaufwand, der Montageaufwand und das Maschinengewicht können dadurch kleiner gehalten werden.

Mit dem Begriff der stehenden Welle ist eine Welle gemeint, die nicht angetrieben ist. Die stehende Welle kann sich aber unabhängig davon bewegen, insbesondere mit dem Federelement der Überlastsicherung, wenn das Förderorgan auf einer Erntegutmatte mit einer schwankenden Materialdicke abrollt und wenn ein Überlastungsfall vorliegt.

Bei einer Federbewegung baut das Federelement auch Rückstellkräfte auf, durch die das Förderorgan nach dem Wegfall der Kraftspitze selbsttätig wieder in die Ausgangsstellung zurückbewegt wird. Als Federelement kann insbesondere eine mechanische Feder verwendet werden. Eine solche mechanische Feder ist kostengünstig, wartungsarm, lange haltbar und mit geringem Aufwand austauschbar.

Bei der Erntebergungsvorrichtung kann es sich um ein Getreideschneidwerk, ein Mähwerk, ein Maisgebiss, ein Grünfuttermähwerk oder eine Pickup-Vorrichtung handeln, in das ein entsprechend ausgestattetes Förderorgan mit gesteuerten Zinken und der vorstehend beschriebenen Überlastsicherung eingebaut ist. Bei dem Federelement kann es sich um eine geeignete Feder handeln, die aus Bandstahl oder Federstahl hergestellt ist. Auch andere flexible Materialien wie Gummi oder faserverstärkter Kunststoff kommen als Material für das Federelement in Betracht. Die Federkennlinie kann linear, degressiv oder progressiv verlaufen.

Von dem Federelement ausführbare Reaktionsbewegungen sind nicht nur auf Reaktionsbewegungen beschränkt, die sich aus Kraftspitzen ergeben, die auf einen Zinken in genau axialer Richtung einwirken, sondern das Federelement kann sich mit seiner Form auch elastisch an die Kräfte anpassen, die aus einer nur annähernd axialen oder eher seitlichen Richtung auf einen Zinken einwirken. Dabei kann es sich insbesondere auch um Kräfte handeln, die aus einer sich während der Erntearbeit ständig ändernden Dicke der vom Förderorgan beförderten Erntegutmatte auf das Federelement einwirken. Die Zinken verfügen dadurch über eine hohe Elastizität in ihrem Förderverhalten, mit der sie sich an wechselnde Arbeitsbedingungen leicht und flexibel anpassen können.

Nach einer Ausgestaltung der Erfindung ist das Federelement als eine Schraubenfeder ausgestaltet, deren schraubenförmige Windungen des Drahtes um die stehende Welle gelegt und deren erstes Ende mit der stehenden Welle und deren zweites Ende mit der Halterung verbunden ist. Während aus einer Richtung quer zur Rotationsrichtung des Förderorgans auf die Zinken einwirkende Kraftspitzen eher von Kunststoffführungen aufgenommen werden können, die in dem Bereich, in dem die Zinken durch die Außenwand des zylindrischen Mantels des Förderorgans nach außen durchtreten, in den zylindrischen Mantel eingesetzt sind, können aus einer axialen Richtung der Zinken auf die Kurbelwelle einwirkende Kraftspitzen von herkömmlichen Überlastsicherungen nur sehr viel schwieriger aufgenommen und kompensiert werden.

Während die in den zylindrischen Mantel von außen eingesteckten Kunststoffführungen einfach wegbrechen können, um der seitlich einwirkenden Kraft nachzugeben und dadurch die einwirkende Kraftspitze abzubauen, entfällt eine solche Lösung insbesondere für die Verbindung eines Zinkens mit der Kurbelwelle, an der eine in axialer Richtung wirkende Überlast auf die Kurbelwelle übertragen wird. Kunststoffelemente, die im Inneren des Förderorgans einfach wegbrechen, sind schwer zugänglich und können nur mit einem erheblichen Reparaturaufwand ersetzt werden. Zudem wären die Zinken nach dem Wegbrechen des Kunststoffelements nicht mehr mit der Kurbelwelle verbunden und würden mit dem Erntegut in die der Erntebergungsvorrichtung nachgeordneten Maschine, wie beispielsweise einen Mähdrescher, gelangen, wo sie einen erheblichen zusätzlichen Schaden anrichten können, oder sie fallen direkt auf das Feld und gehen damit verloren, was ebenfalls aus mehreren Gründen unerwünscht ist.

Wenn auf einen Zinken insbesondere eine in die axiale Richtung des Zinkens weisende Kraftspitze einwirkt, beispielsweise, weil der Zinken mit seiner Spitze auf einen Stein stößt, der nicht wegspringt, ist der aus dem Fremdkörperkontakt auf die Kurbelwelle einwirkende Kraftvektor in den seltensten Fällen - und wenn, dann auch nur ganz kurz - lotrecht auf die Längsachse der Kurbelwelle gerichtet. Das gilt insbesondere auch deshalb, weil sich die Winkelstellung der Zinken auf der Kurbelwelle bei der Erntearbeit durch die ständige Drehung des Förderorgans um seine Rotationsachse ständig ändert. Meistens zielt die Längsachse eines Zinkens während einer Umdrehung des Förderorgans an der Rotationsachse der Kurbelwelle vorbei. Wenn nun eine Kraftspitze in axialer Richtung des Zinkens wirkt, erzeugt diese Kraftspitze ein an der Rotationsachse der Kurbelwelle vorbei gerichtetes Kraftmoment, das nun vom Federelement aufgefangen und in eine Aufdehnungsbewegung des Federelements umgesetzt wird. Da das Federelement als eine Schraubenfeder ausgebildet ist, die außen um die stehende Welle herum gelegt ist, mit der die Kurbelwelle drehfest verbunden ist, wird eine in axialer Richtung auf einen Zinken und an der Rotationsachse der Kurbelwelle vorbei zielende Kraftspitze in ein Kraftaufnahmeelement in Gestalt der Schraubenfeder eingeleitet, das in die Kraftrichtung der einwirkenden Überlast mit einer Aufdehnungsbewegung beweglich ist. Die Schraubenfeder ist durch die Anordnung, bei der ihre Wicklung um die stehende Welle umläuft, dazu in der Lage, sich in der Richtung der auf sie einwirkenden Kraft aufzudehnen. Die Kraftübertragung der Kraftspitze vom Zinken auf die Schraubenfeder erfolgt dadurch in einer identischen Wirkrichtung, wodurch die Konstruktion einfach und leicht gehalten werden kann, ohne dadurch die Sicherungswirkung zu beeinträchtigen. Wenn die Schraubenfeder mehrere Windungen aufweist, kann sich das einwirkende Kraftmoment auf mehrere Windungen verteilen.

Aus der Aufdehnungsbewegung der Schraubenfeder ergibt sich ein Stellweg, um den sich die stehende Welle und damit auch die damit fest verbundene Kurbelwelle in ihrer Winkellage relativ zur Winkellage des Förderorgans verdrehen kann, solange die Schraubenfeder aufgedehnt ist. Indem die einwirkende Überlast in eine Aufdehnbewegung der Schraubenfeder umgelenkt wird, wird die auf den Zinken einwirkende Kraftspitze in den Zinken, der Kurbelwelle und der stehenden Welle neutralisiert. Diese Maschinenorgane werden dadurch vor einer Beschädigung geschützt. Auch die gesteuerte Bewegung des Zinkens kann sich um das Maß des Stellwegs verändern, wodurch der Zinken von der auf ihn einwirkenden Überlast entlastet wird. Fällt die Überlast weg, kann sich die Schraubenfeder wieder zu ihrer ursprünglichen Form zusammenziehen. Dabei wird der bei der Aufdehnbewegung der Schraubenfeder der stehenden Welle, der Kurbelwelle und dem Zinken verfügbar gemachte Stellweg zurückgeholt, so dass sich die stehende Welle, die Kurbelwelle und der Zinken wieder in den Winkellagen und Steuerstellungen befinden, in denen sie sich nach der Drehstellung des Förderorgans auch in einem von einer Überlast unbelasteten Zustand befinden sollen.

Nach einer Ausgestaltung der Erfindung ist das Federelement aus einem Draht geformt. Als Draht kann beispielsweise ein Runddraht aus Eisen mit einem Durchmesser von beispielsweise 5 - 15 mm verwendet werden. Das metallische Material verfügt über eine dem Material immanente Eigenelastizität, das eine vielfache Aufdehnungsbewegung des Federelements mit einer anschließenden Rückkontraktion in die Ausgangsform zulässt. Wenn auch das Federelement nun durch die Ausbildung in Gestalt eines Drahtes über eine Eigenelastizität verfügt, kann das Federelement auf eine auf einen Zinken einwirkende Kraftspitze durch eine der Richtung des aus der Kraftspitze auf die Überlastsicherung einwirkenden Kraftvektors entsprechende Ausweichbewegung reagieren.

Nach einer Ausgestaltung der Erfindung sind die Halterung und das Federelement einstückig aus einem Draht geformt. Wenn die Überlastsicherung und das Federelement einstückig aus demselben Draht geformt sind, vereinfacht sich die Montage der Überlastsicherung und der Halterung, weil beide nun nicht mehr als separate Bauteile miteinander verbunden werden müssen.

Nach einer Ausgestaltung der Erfindung ist der Verschwenkweg der Halterung und/oder des Federelements durch zumindest einen Anschlag beschränkt. Wenn sich die räumliche Lage der stehenden Welle durch die neuartige Überlastsicherung leichter verändern kann, ist es vorteilhaft, den Bewegungsbereich der Überlastsicherung durch Anschläge beispielsweise nach oben und/oder unten hin zu beschränken, um zu verhindern, dass die Zinken oder andere Teile des Förderorgans mit anderen Bauteilen der Erntebergungsvorrichtung kollidieren, oder sich zu weit nach oben hin vom Boden der Erntebergungsvorrichtung entfernen, so dass die Zinken und das Förderorgan das Erntegut nicht mehr effektiv abfördern können.

Nach einer Ausgestaltung der Erfindung sind an der Erntebergungsvorrichtung mehrere Anlenkpunkte ausgebildet, die sich in einer unterschiedlichen räumlichen Lage zur stehenden Welle befinden, an denen die Überlastsicherung über die Halterung mit dem Rahmen der Erntebergungsvorrichtung verbindbar ist. Indem die Anbindung der Überlastsicherung von einem Anlenkpunkt zu einem anderen Anlenkpunkt verändert wird, ergeben sich durch die daraus folgende veränderte räumliche Lage der stehenden Welle und die daraus folgende Verstellung der Kurbelwelle im Verhältnis zum übrigen Förderorgan veränderte Steuerzeiten für die gesteuerten Zinken. Die Anlenkpunkte können sowohl in der Tiefe als auch in der Höhe voneinander abweichen. Vorteilhaft ist es, wenn die verschiedenen Anlenkpunkte in einer vertikalen Ebene angeordnet sind, weil dadurch die Verstellung einfacher und die Auswahl eines geeigneten Anlenkpunktes übersichtlicher ist. Die unterschiedlichen Anlenkpunkte können in einer Kulissenplatte ausgebildet sein.

Nach einer Ausgestaltung der Erfindung ist die als Draht ausgebildete Halterung an ihrem rahmenseitigen Ende um 90° gekröpft, die Anlenkpunkte sind als Einstecklöcher in einer Kulissenplatte ausgebildet, die Halterung ist an einem Verstellhebel gehalten, mit dem die Halterung in einem Einsteckloch lagefixiert gehalten ist, und der Verstellhebel ist dazu ausgebildet, das abgekröpfte rahmenseitige Ende der Halterung aus einem Einsteckloch auszuheben und in ein solches einzusenken. In einem als Einsteckloch ausgebildeten Anlenkpunkt ist eine als Draht ausgebildete Halterung gut gehalten und geführt. Mit dem Verstellhebel kann das gekröpfte Ende der Halterung in einem ausgewählten Einsteckloch gehalten werden. Durch den Verstellhebel wird das Umstecken der Halterung von einem Anlenkpunkt in einen anderen Anlenkpunkt erleichtert.

Nach einer Ausgestaltung der Erfindung ist die Erntebergungsvorrichtung als ein Getreideschneidwerk mit zumindest drei über die Arbeitsbreite verteilten Rahmenteilen ausgebildet, die gelenkig miteinander verbunden sind, das vom Getreideschneidwerk geborgene Erntegut wird mittig zusammengeführt und durch eine im mittigen Rahmenteil befindliche Abgabeöffnung an eine im Gutfluss nachgeordnete Erntemaschine abgefördert, wobei sich das Förderorgan im mittigen Rahmenteil befindet. Beim Einbau des vorstehend beschriebenen Förderorgans in ein Getreideschneidwerk mit der ebenfalls vorstehend beschriebenen Überlastsicherung ergibt sich ein besonders effektiver Einsatz der vorgeschlagenen Technik.

Nach einer Ausgestaltung der Erfindung weist das Förderorgan an seinen über den zylindrischen Mantel überstehenden Abschnitten eine Kegelform oder eine Kegelstumpfform auf, auf die ein Schneckenblech aufgesetzt ist. Da das Förderorgan das Erntegut besonders effektiv unterschlächtig in dem Abschnitt abfördert, in dem sich die gesteuerten Zinken befinden, je nach Anwendungsfall aber auch Erntegut von der Seite her an das Förderorgan herangeführt werden kann, ergibt sich im Übergangsbereich von der seitlichen Heranführung des Ernteguts zu dem Abschnitt, in dem sich die gesteuerten Zinken befinden, eine besonders schluckfreudige Annahme des seitlich herangeführten Ernteguts durch die Kegel- oder Kegelstumpfform, weil diese im oberen schlanken Bereich der Kegelform viel Raum lässt für das herangeführte Erntegut, wobei dann aber das Schneckenblech das dort ankommende Erntegut erfasst und in den Abschnitt abfördert, in dem sich die gesteuerten Zinken befinden. Durch die Schneckenbleche wird auch das Erntegut, das von vorne her breiter als der Abschnitt mit den gesteuerten Zinken an das Förderorgan herangeführt wird, von der Seite her in den Wirkbereich der gesteuerten Zinken geschoben.

Es wird ausdrücklich darauf hingewiesen, dass sich die im Anspruch 1 beanspruchte Erfindung mit den in beliebigen Kombinationen mit den Merkmalen einzelner oder aller Unteransprüche realisieren lässt, soweit dem keine technisch zwingenden Gründe entgegenstehen.

Weitere Abwandlungen und Ausgestaltungen der Erfindung lassen sich der nachfolgenden gegenständlichen Beschreibung, den Zeichnungen und den Ansprüchen entnehmen.

Die Erfindung soll nun anhand eines Ausführungsbeispiels näher erläutert werden. Es zeigen:
- Fig. 1:: eine Ansicht von schräg vorne und oben auf ein Getreideschneidwerk,
- Fig. 2:: eine vergrößerte Detailansicht des in Fig. 1 gezeigten Förderorgans,
- Fig. 3:: eine Ansicht des Förderorgans mit freiliegenden Enden, und
- Fig. 4:: eine perspektivische Schnittansicht durch ein Förderorgan.

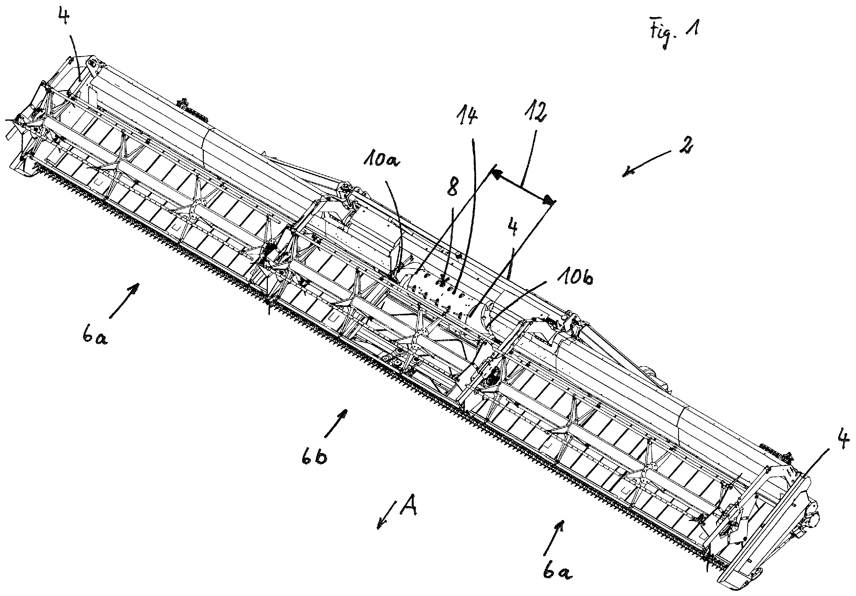

In Fig. 1 ist eine Ansicht von schräg vorne und oben auf ein Getreideschneidwerk als ein Ausführungsbeispiel für eine Erntebergungsvorrichtung 2 gezeigt. Die Erntebergungsvorrichtung 2 verfügt über einen Rahmen 4, an dem die Bauteile der Erntebergungsvorrichtung 2 befestigt sind. Im Ausführungsbeispiel ist die Erntebergungsvorrichtung 2 dreiteilig ausgeführt, wobei die seitlichen Rahmenteile 6a schwenkbeweglich mit dem mittleren Rahmenteil 6b verbunden sind. Die Erntebergungsvorrichtung 2 wird bei der Ernte in der Arbeitsrichtung A über ein Feld bewegt. Das geschnittene Erntegut wird von den seitlichen Rahmenteilen 6a quer zur Arbeitsrichtung A zum mittleren Rahmenteil 6b befördert und dort zusammen mit dem am Rahmenteil 6b geschnittenen Erntegut in die Richtung des Förderorgans 8 abgefördert.

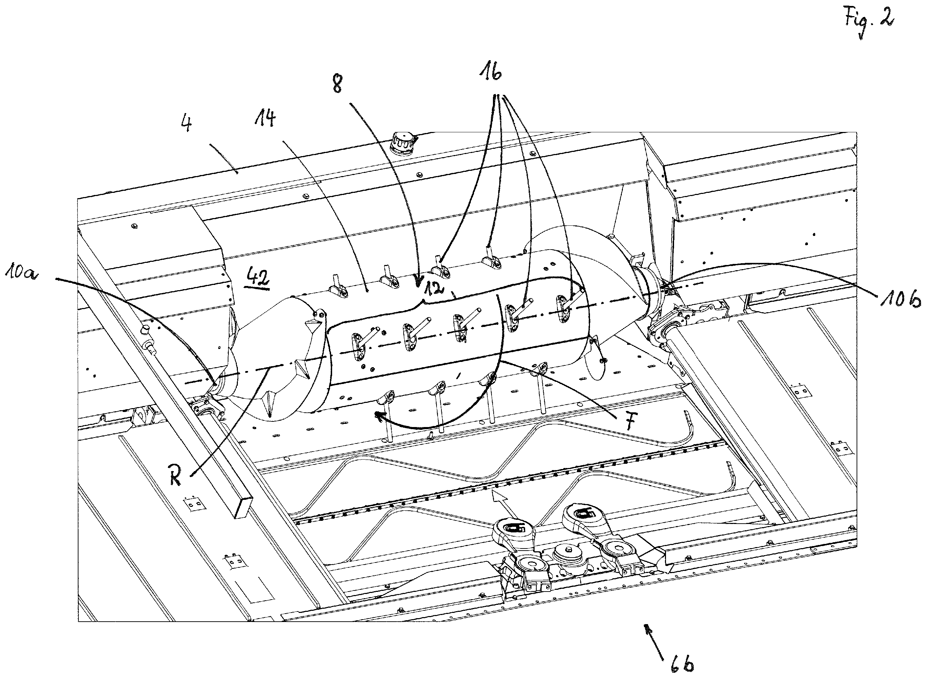

Das Förderorgan 8 weist einen erstes Ende 10b und ein zweites Ende 10a auf. Zwischen diesen beiden Enden 10a, 10b befindet sich ein Abschnitt 12 mit einem zylindrischen Mantel 14. Im Abschnitt 12 fördert das Förderorgan 8 das Erntegut bei seiner Rotationsbewegung in einer zum zylindrischen Mantel 14 tangentialen Richtung unterschlächtig ab, wie das in der Fig. 2 durch den Pfeil angedeutet ist, der die Förderrichtung F anzeigt. Das vom Förderorgan 8 abgeforderte Erntegut wird durch die Abgabeöffnung 42 an eine nachgeordnete Maschine abgegeben. Die Fig. 2 zeigt eine vergrößerte Detailansicht des in Fig. 1 gezeigten Förderorgans 8. Das Förderorgan 8 weist im Abschnitt 12 eine Anzahl von gesteuerten Zinken 16 auf, die zumindest in einem Teil des zylindrischen Mantels 14 in einer zumindest annähernd radialen Richtung zur Rotationsachse R des Förderorgans 8 über diesen überstehen. Die Rotationsachse R ist in Fig. 2 durch eine strichpunktierte Linie kenntlich gemacht. In der gezeigten Ansicht ist erkennbar, dass die Zinken 16 je nach dem Rotationswinkel, in dem sich ein betreffender Zinken 16 befindet, unterschiedlich weit über den zylindrischen Mantel 14 hinaus stehen. Allgemein lässt sich sagen, dass die Zinken 16 vorne im Annahmebereich weiter hervorstehen als im rückwärtigen Bereich, in dem die Zinken 16 auch vollständig im zylindrischen Mantel 14 verschwinden können.

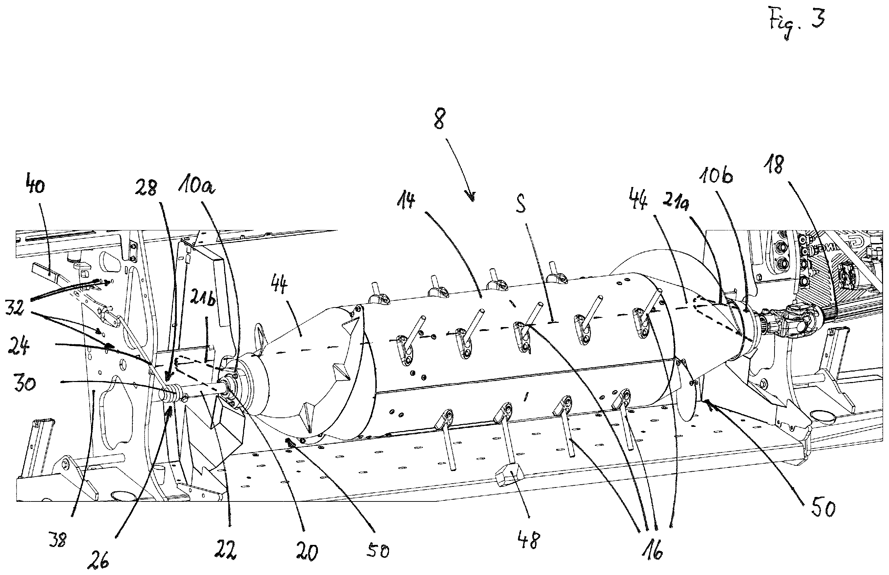

Das Förderorgan 8 wird an seinem ersten Ende 10b über einen Antrieb 18 in eine drehende Bewegung versetzt. Zu diesem Zweck ist das Förderorgan 8 mit dem Antrieb 18 - im gezeigten Ausführungsbeispiel einer Antriebswelle - drehfest verbunden. An seinem zweiten Ende 10a ist das Förderorgan 8 über ein Drehlager 20 auf der stehenden Welle 22 abgestützt. Die stehende Welle 22 ist in Fig. 3 dargestellt, die eine Ansicht des Förderorgans 8 mit freiliegenden Enden zeigt. In gestrichelten Linien sind die beiden Lenkerarme 21a, 21b dargestellt, an denen das Förderorgan 8 um die ebenfalls in einer gestrichelten Linie angedeutete Schwenkachse S schwenkbeweglich gehalten ist. Über die schwenkbewegliche Lagerung mit den Lenkerarmen 21a, 21b kann das Förderorgan 8 auf der Erntegutmatte schwimmen, die unter dem Förderorgan 8 in Richtung der Abgabeöffnung 42 durchgefördert wird. Mit dem Förderorgan 8 bewegt sich auch die stehende Welle 22 je nach Bewegungsrichtung der Lenkerarme 21a, 21b aufwärts oder abwärts.

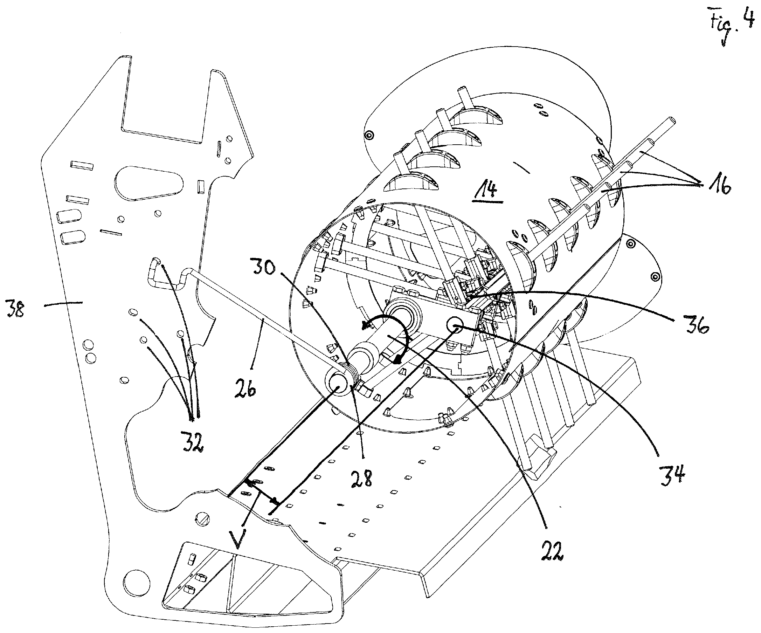

Die stehende Welle 22 ist über das Federelement 28 der Überlastsicherung 26 und der Halterung 24 mit dem Rahmen 4 der Erntebergungsvorrichtung 2 verbunden. Im gezeigten Ausführungsbeispiel ist das Federelement 28 eine Schraubenfeder 30. Die stehende Welle 22 kann sich bei einer Aufdehnbewegung und einer Rückstellbewegung des Federelements 28 in eine durch den in Fig. 4 eingezeichneten Doppelpfeil angedeutete entsprechende Richtung um ihre eigene Achse drehen.

Die Überlastsicherung 26 ist über die Halterung 24 und einen Anlenkpunkt 32 mit dem Rahmen 4 der Erntebergungsvorrichtung 2 verbunden. In den Ansichten in den Fig. 3 und 4 sind mehrere Anlenkpunkte 32 zu sehen, die in einer Kulissenplatte 38 angeordnet sind. Die Anlenkpunkte 32 befinden sich in einer unterschiedlichen räumlichen Lage zur stehenden Welle 22. Je nachdem, in welchen der Anlenkpunkte 32 das rahmenseitige um 90° gekröpfte Ende der Halterung 24 eingesteckt ist, ergeben sich durch die daraus folgende veränderte räumliche Lage der stehenden Welle 22 und die daraus folgende Verstellung der Kurbelwelle 34 im Verhältnis zum übrigen Förderorgan 8 veränderte Steuerzeiten für die gesteuerten Zinken 16. Über einen Verstellhebel 40 kann die Halterung 24 in einem der verschiedenen Anlenkpunkte 32 gehalten werden. Der Verstellhebel 40 kann aber auch als Verstellhilfe genutzt werden, um die Halterung 24 von einem Anlenkpunkt 32 auf einen anderen Anlenkpunkt 32 umzustecken.

Die Kurbelwelle 34 ist in der perspektivischen Schnittansicht durch das Förderorgan 8 in der Fig. 4 erkennbar. Die Achse der Kurbelwelle 34 weist einen Versatz V im Verhältnis zur Rotationsachse R und der stehenden Welle 22 auf. Auf der Kurbelwelle 34 befinden sich die Lagerbereiche 36, in denen die jeweiligen Zinken 16 auf der Kurbelwelle 34 gelagert und abgestützt sind. Die Kurbelwelle 34 ist mit der stehenden Welle 22 fest verbunden und ist nicht drehbeweglich angetrieben.

Wenn eine Kraftspitze mit einer Überlast auf einen Zinken 16 einwirkt, insbesondere in einer axialen Richtung durch einen Fremdkörper 48, wie in Fig. 3 gezeigt, erzeugt der Zinken 16 einen Stoßimpuls, der in einer Richtung quer zur Kurbelwelle 34 und zur stehenden Welle 22 gerichtet ist. Diesen über die Kurbelwelle 34 und die stehende Welle 22 auch auf die Halterung 24 einwirkenden Stoßimpuls kann das Federelement 28 und insbesondere die Schraubenfeder 30 durch eine Federbewegung, insbesondere eine Aufdehnbewegung, aufnehmen. Dabei baut sich eine Rückstellkraft in dem Federelement 28 auf. Das Federelement 28 bewegt sich nach dem Wegfall der Kraftspitze von den Rückstellkräften im Federelement 28 angetrieben selbsttätig wieder in seine ursprüngliche Lage zurück.

In Fig. 3 sind am Förderorgan 8 noch die Abschnitte 44 erkennbar, die eine Kegelform aufweisen. In den Abschnitten 44 sind auf den Mantel der Kegel ein oder mehrere Schneckenbleche 46 aufgesetzt. Die Abschnitte 44 bilden auf diese Weise zum Boden der Erntebergungsvorrichtung 2 hin keilförmige Taschen 50 aus, die angefördertes Erntegut sehr gut schlucken. Mit den Schneckenblechen 46 wird das von den Taschen 50 aufgenommen der Erntegut in den Wirkbereich der gesteuerten Zinken 16 geleitet.

Die Erfindung ist nicht auf das vorstehend beschriebene Ausführungsbeispiel beschränkt. Dem Fachmann bereitet es unter Zuhilfenahme seines Fachwissens keine Schwierigkeit, das Ausführungsbeispiel auf eine ihm als geeignet erscheinende Weise abzuwandeln, um es an einen konkreten Anwendungsfall anzupassen.

### Bezugszeichenliste

- 2: Erntebergungsvorrichtung
- 4: Rahmen
- 6: Rahmenteil
- 8: Förderorgan
- 10: erstes und zweites Ende
- 12: Abschnitt
- 14: zylindrischer Mantel
- 16: Zinken
- 18: Antrieb
- 20: Drehlager
- 21: Lenkerarm
- 22: stehende Welle
- 24: Halterung
- 26: Überlastsicherung
- 28: Federelement
- 30: Schraubenfeder
- 32: Anlenkpunkt
- 34: Kurbelwelle
- 36: Lagerbereich
- 38: Kulissenplatte
- 40: Verstellhebel
- 42: Abgabeöffnung
- 44: Abschnitt
- 46: Schneckenblech
- 48: Fremdkörper
- 50: Tasche
- A: Arbeitsrichtung
- R: Rotationsachse
- F: Förderrichtung
- V: Versatz

## Patentansprüche

1. Erntebergungsvorrichtung (2) mit einem Rahmen (4) und einem um eine Rotationsachse (R) rotierend antreibbaren Förderorgan (8), das an gegenüberliegenden ersten und zweiten Enden (10a, 10b) drehbeweglich gelagert ist und das zumindest in einem Abschnitt (12) einen zylindrischen Mantel (14) aufweist, in dem das Förderorgan (8) das Erntegut bei seiner Rotationsbewegung in einer zum zylindrischen Mantel (14) tangentialen Richtung unterschlächtig abfördert, wobei das Förderorgan (8) in diesem Abschnitt (12) gesteuerte Zinken (16) aufweist, die zumindest in einem Teil des zylindrischen Mantels (14) in einer zumindest annähernd radialen Richtung zur Rotationsachse (R) des Förderorgans (8) über diesen überstehen, die Zinken (16) drehbeweglich auf einer im Innenraum des Förderorgans (8) angeordneten Kurbelwelle (34) gelagert sind, die mit einer stehenden Welle (22) fest verbunden ist und die im Lagerbereich (36) eines jeweiligen Zinkens (16) einen radialen Versatz (V) zur Rotationsachse (R) des Förderorgans (8) aufweist, das Förderorgan (8) an seinem ersten Ende (10b) drehbar an einem schwenkbar gelagerten Lenkerarm (21a) gehalten und fest mit einem Antrieb (18) verbunden ist und an seinem zweiten Ende (10a) über ein Drehlager (20) drehbar auf einer stehenden Welle (22) gelagert ist, die an einem schwenkbar gelagerten Lenkerarm (21b) gehalten ist, wobei die Zinken (16) durch eine Überlastsicherung (26) gegen eine Überlast abgesichert sind, **dadurch gekennzeichnet, dass** die Überlastsicherung (26) an ihrer der stehenden Welle (22) zugewandten Seite mit der stehenden Welle (22) und an ihrer der stehenden Welle (22) abgewandten Seite über eine Halterung (24) mit dem Rahmen (4) verbunden ist, die Überlastsicherung (26) als ein Federelement (28) ausgebildet ist, das bei der Einwirkung einer Überlast mit einer Federbewegung eine Drehbewegung der stehenden Welle (22) aus einer Ausgangsstellung in eine Ausweichstellung zulässt, indem sie eine auf die stehende Welle (22) einwirkende Überlast in sich aufnimmt und dabei Rückstellkräfte in sich aufbaut, und das Federelement (28) nach dem Wegfall der Überlast von den Rückstellkräften im Federelement (28) angetrieben selbsttätig wieder in seine ursprüngliche Lage zurückbeweglich ist und dabei auch die stehende Welle (22) in ihre Ausgangsstellung zurückstellt.

2. Erntebergungsvorrichtung (2) nach Anspruch 1, **dadurch gekennzeichnet, dass** das Federelement (28) als eine Schraubenfeder (30) ausgestaltet ist, deren schraubenförmige Windungen des Drahtes um die stehende Welle (22) gelegt und deren erstes Ende mit der stehenden Welle (22) und deren zweites Ende mit der Halterung (24) verbunden ist.

3. Erntebergungsvorrichtung (2) nach Anspruch 1 oder 2, **dadurch gekennzeichnet, dass** das Federelement (28) aus einem Draht geformt ist.

4. Erntebergungsvorrichtung (2) nach Anspruch 3, **dadurch gekennzeichnet, dass** die Halterung (24) und das Federelement (28) einstückig aus einem Draht geformt sind.

5. Erntebergungsvorrichtung (2) nach einem der vorhergehenden Ansprüche, **dadurch gekennzeichnet, dass** der Verschwenkweg der Halterung (24) und/oder des Federelements (28) durch zumindest einen Anschlag beschränkt ist.

6. Erntebergungsvorrichtung (2) nach einem der vorhergehenden Ansprüche, **dadurch gekennzeichnet, dass** an der Erntebergungsvorrichtung (2) mehrere Anlenkpunkte (32) ausgebildet sind, die sich in einer unterschiedlichen räumlichen Lage zur stehenden Welle (22) befinden, an denen die Überlastsicherung (26) über die Halterung (24) mit dem Rahmen (4) der Erntebergungsvorrichtung (2) verbindbar ist.

7. Erntebergungsvorrichtung (2) nach einem der vorhergehenden Ansprüche , **dadurch gekennzeichnet, dass** die Halterung (24) an ihrem rahmenseitigen Ende um 90° gekröpft ist, die Anlenkpunkte (32) als Einstecklöcher in einer Kulissenplatte (38) ausgebildet sind, die Halterung (24) an einem Verstellhebel (40) gehalten ist, mit dem die Halterung (24) in einem Einsteckloch lagefixiert gehalten ist, und der Verstellhebel (40) dazu ausgebildet ist, das abgekröpfte rahmenseitige Ende der Halterung (24) aus einem Einsteckloch auszuheben und in ein solches einzusenken.

8. Erntebergungsvorrichtung (2) nach einem der vorhergehenden Ansprüche, **dadurch gekennzeichnet, dass** die Erntebergungsvorrichtung (2) als ein Getreideschneidwerk mit zumindest drei über die Arbeitsbreite verteilten Rahmenteilen (6a, 6b) ausgebildet ist, die gelenkig miteinander verbunden sind, das vom Getreideschneidwerk geborgene Erntegut mittig zusammengeführt und durch eine im mittigen Rahmenteil (6b) befindliche Abgabeöffnung (42) an eine im Gutfluss nachgeordnete Erntemaschine abgefördert wird, wobei sich das Förderorgan (8) im mittigen Rahmenteil (6b) befindet.

9. Erntebergungsvorrichtung (2) nach Anspruch 8, **dadurch gekennzeichnet, dass** das Förderorgan (8) an seinen über den zylindrischen Mantel (14) überstehenden Abschnitten (44) eine Kegelform oder eine Kegelstumpfform aufweist, auf die ein Schneckenblech (46) aufgesetzt ist.

## Claims

1. Harvesting device (2) comprising a frame (4) and a conveying member (8), which can be driven in rotation about an axis of rotation (R) and is mounted for rotary motion at opposite first and second ends (10a, 10b) and, at least in one section (12), has a cylindrical casing (14), in which the conveying member (8) conveys the crop away with an undershot action in a direction tangential to the cylindrical casing (14) during its rotary motion, wherein, in this section (12), the conveying member (8) has controlled tines (16), which, at least in part of the cylindrical casing (14), project beyond the latter in an at least approximately radial direction with respect to the axis of rotation (R) of the conveying member (8), the tines (16) are mounted for rotary motion on a crankshaft (34), which is arranged in the interior of the conveying member (8), is rigidly connected to a dead shaft (22) and, in the bearing region (36) of each tine (16), has a radial offset (V) with respect to the axis of rotation (R) of the conveying member (8), the conveying member (8) is held rotatably at its first end (10b) on a pivotably mounted link arm (21a) and is rigidly connected to a drive (18) and is rotatably mounted at its second end (10a), via a rotary bearing (20), on a dead shaft (22), which is held on a pivotably mounted link arm (21b), wherein the tines (16) are protected against an overload by an overload safeguard (26), **wherein** the overload safeguard (26) is connected on its side facing the dead shaft (22) to the dead shaft (22) and on its side facing away from the dead shaft (22), via a retainer (24), to the frame (4), the overload safeguard (26) is designed as a spring element (28), which, under the action of an overload, by means of a spring motion, allows a rotary motion of the dead shaft (22) out of an initial position into a deflected position by absorbing an overload acting on the dead shaft (22) and, in the process, building up in itself restoring forces, and, after the disappearance of the overload, the spring element (28) is capable of moving back automatically into its original position, being driven by the restoring forces in the spring element (28), and, in the process, also resets the dead shaft (22) to its initial position.

2. Harvesting device (2) according to Claim 1, wherein the spring element (28) is configured as a helical spring (30), the helical wire windings of which are placed around the dead shaft (22), and the first end of which is connected to the dead shaft (22) and the second end of which is connected to the retainer (24).

3. Harvesting device (2) according to Claim 1 or 2, wherein the spring element (28) is formed from a wire.

4. Harvesting device (2) according to Claim 3, wherein the retainer (24) and the spring element (28) are formed integrally from a wire.

5. Harvesting device (2) according to one of the preceding claims, wherein the pivoting travel of the retainer (24) and/or of the spring element (28) is limited by at least one stop.

6. Harvesting device (2) according to one of the preceding claims, wherein a plurality of articulation points (32) is formed on the harvesting device (2), which articulation points are situated in a different spatial position with respect to the dead shaft (22), at which the overload safeguard (26) can be connected to the frame (4) of the harvesting device (2) via the retainer (24).

7. Harvesting device (2) according to one of the preceding claims, wherein the retainer (24) is cranked by 90° at its frame end, the articulation points (32) are designed as plug-in holes in a slotted link plate (38), the retainer (24) is held on an adjusting lever (40), by means of which the retainer (24) is held in a fixed position in a plug-in hole, and the adjusting lever (40) is designed to lift the cranked frame end of the retainer (24) out of a plug-in hole and to lower it into such a hole.

8. Harvesting device (2) according to one of the preceding claims, wherein the harvesting device (2) is designed as a grain table with at least three frame parts (6a, 6b), which are distributed over the working width and are connected to one another in an articulated manner, the crop harvested by the grain table is gathered centrally and discharged via a discharge opening (42) situated in the central frame part (6b) to a harvesting machine arranged downstream in the crop flow, wherein the conveying member (8) is situated in the central frame part (6b).

9. Harvesting device (2) according to Claim 8, wherein the conveying member (8) has, in its sections (44) projecting beyond the cylindrical casing (14), a conical shape or a frustoconical shape on which an auger plate (46) is mounted.

## Revendications

1. Dispositif de récolte (2) comportant un châssis (4) et un organe de transport (8) pouvant être entraîné en rotation autour d'un axe de rotation (R), qui est monté de manière mobile en rotation au niveau de première et deuxième extrémités opposées (10a, 10b) et qui présente, au moins dans une section (12), une enveloppe cylindrique (14) dans laquelle l'organe de transport (8) transporte le produit récolté par le dessous dans une direction tangentielle à l'enveloppe cylindrique (14) lors de son mouvement de rotation, où l'organe de transport (8) présente dans cette section (12) des dents commandées (16) qui, au moins dans une partie de l'enveloppe cylindrique (14), dépassent de celle-ci dans une direction au moins approximativement radiale par rapport à l'axe de rotation (R) de l'organe de transport (8), les dents (16) sont montées de manière mobile en rotation sur un vilebrequin (34) agencé dans l'espace intérieur de l'organe de transport (8), qui est relié de manière fixe à un arbre vertical (22) et qui présente, dans la zone de palier (36) d'une dent respective (16), un décalage radial (V) par rapport à l'axe de rotation (R) de l'organe de transport (8), l'organe de transport (8) est maintenu de manière rotative à sa première extrémité (10b) de manière rotative sur un bras de guidage (21a) monté de manière pivotante et est relié de manière fixe à un entraînement (18), et est monté à sa deuxième extrémité (10a) est monté de manière rotative par l'intermédiaire d'un palier rotatif (20) sur un arbre vertical (22) qui est maintenu sur un bras de guidage (21b) monté de manière pivotante, où les dents (16) sont protégées contre une surcharge par une protection contre les surcharges (26), **caractérisé en ce que** la protection contre les surcharges (26) est reliée à l'arbre vertical (22) sur son côté tourné vers l'arbre vertical (22) et au châssis (4) sur son côté détourné de l'arbre vertical (22) par l'intermédiaire d'un support (24), la protection contre les surcharges (26) est réalisée sous la forme d'un élément à ressort (28) qui, sous l'effet d'une surcharge, permet, par un mouvement de ressort, un mouvement de rotation de l'arbre vertical (22) d'une position initiale à une position d'évitement par le fait qu'il absorbe une surcharge agissant sur l'arbre vertical (22) et développe ainsi des forces de rappel en son sein, et l'élément à ressort (28) peut être ramené automatiquement dans sa position initiale après la disparition de la surcharge par les forces de rappel dans l'élément à ressort (28) et ramène ainsi également l'arbre vertical (22) dans sa position initiale.

2. Dispositif de récolte (2) selon la revendication 1, **caractérisé en ce que** l'élément à ressort (28) est conçu sous la forme d'un ressort hélicoïdal (30) dont les spires hélicoïdales du fil métallique sont placées autour de l'arbre vertical (22) et dont la première extrémité est reliée à l'arbre vertical (22) et la deuxième extrémité au support (24).

3. Dispositif de récolte (2) selon la revendication 1 ou 2, **caractérisé en ce que** l'élément à ressort (28) est formé à partir d'un fil métallique.

4. Dispositif de récolte (2) selon la revendication 3, **caractérisé en ce que** le support (24) et l'élément à ressort (28) sont formés d'une seule pièce à partir d'un fil métallique.

5. Dispositif de récolte (2) selon l'une quelconque des revendications précédentes, **caractérisé en ce que** la course de pivotement du support (24) et/ou de l'élément à ressort (28) est limitée par au moins une butée.

6. Dispositif de récolte (2) selon l'une quelconque des revendications précédentes, **caractérisé en ce que** plusieurs points d'articulation (32) sont réalisés sur le dispositif de récolte (2), lesquels se trouvent dans une position spatiale différente par rapport à l'arbre vertical (22), au niveau desquels la protection contre les surcharges (26) peut être reliée au châssis (4) du dispositif de récolte (2) par l'intermédiaire du support (24).

7. Dispositif de récolte (2) selon l'une quelconque des revendications précédentes, **caractérisé en ce que** le support (24) est coudé à 90° à son extrémité côté châssis, les points d'articulation (32) sont réalisés sous la forme de trous d'enfichage dans une plaque coulissante (38), le support (24) est maintenu sur un levier de réglage (40) avec lequel le support (24) est maintenu en position fixe dans un trou d'enfichage, et le levier de réglage (40) est réalisé pour soulever l'extrémité coudée côté châssis du support (24) d'un trou d'enfichage et l'enfoncer dans un tel trou d'enfichage.

8. Dispositif de récolte (2) selon l'une quelconque des revendications précédentes, **caractérisé en ce que** le dispositif de récolte (2) est réalisé sous la forme d'un mécanisme de coupe de céréales comportant au moins trois parties de châssis (6a, 6b) réparties sur la largeur de travail, qui sont reliées entre elles de manière articulée, le produit récolté ramassé par le mécanisme de coupe de céréales est rassemblé au centre et transportée par une ouverture de déversement (42) se trouvant dans la partie de châssis centrale (6b) vers une moissonneuse placée en aval dans le flux de récolte, l'organe de transport (8) se trouvant dans la partie de châssis centrale (6b).

9. Dispositif de récolte (2) selon la revendication 8, **caractérisé en ce que** l'organe de transport (8) présente, au niveau de ses sections (44) dépassant de l'enveloppe cylindrique (14), une forme conique ou une forme tronconique sur laquelle est placée une tôle hélicoïdale (46).
